(19) Europäisches Patentamt European Patent Office Office européen des brevets

(11) **EP 1 851 167 B1**

(12) **FASCICULE DE BREVET EUROPEEN**

(45) Date de publication et mention de la délivrance du brevet:
**06.08.2008 Bulletin 2008/32**

(21) Numéro de dépôt: **06709226.2**

(22) Date de dépôt: **01.02.2006**

(51) Int Cl.:
**C01B 6/24** $^{(2006.01)}$

(86) Numéro de dépôt international:
**PCT/FR2006/000234**

(87) Numéro de publication internationale:
**WO 2006/082316 (10.08.2006 Gazette 2006/32)**

(54) **PROCEDE POUR LE STOCKAGE DE L'HYDROGENE METTANT EN JEU UN SYSTEME EQUILIBRE ENTRE UN ALLIAGE DE MAGNESIUM ET DE PALLADIUM ET L'HYDRURE CORRESPONDANT**

WASSERSTOFFLAGERUNGSVERFAHREN MIT EINEM SYSTEM IM GLEICHGEWICHT ZWISCHEN EINER LEGIERUNG AUS MAGNESIUM UND PALLADIUM SOWIE DEM ENTSPRECHENDEN HYDRID

HYDROGEN STORAGE METHOD EMPLOYING A SYSTEM IN EQUILIBRIUM BETWEEN AN ALLOY OF MAGNESIUM AND OF PALLADIUM AND THE CORRESPONDING HYDRIDE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.02.2005 FR 0501229**

(43) Date de publication de la demande:
**07.11.2007 Bulletin 2007/45**

(73) Titulaire: **Institut Français du Pétrole 92852 Rueil Malmaison Cédex (FR)**

(72) Inventeurs:
• **RAYBAUD, Pascal F-92500 Rueil Malmaison (FR)**
• **ROPITAL, François F-92500 Rueil Malmaison (FR)**

(56) Documents cités:
**EP-A- 0 196 190      WO-A-99/20422
US-A1- 2002 197 181**

## Description

<u>Domaine de l'invention</u>

La présente invention concerne un procédé de stockage réversible de l'hydrogène mettant en jeu de nouveaux matériaux cristallins potentiellement intéressants pour le stockage de l'hydrogène.

<u>Art antérieur</u>

Dans le cadre de la recherche de nouveaux systèmes énergétiques, le développement de procédés de stockage et de transport de l'hydrogène apparaît très important. Le magnésium est un élément connu pour ses bonnes propriétés d'absorbeur d'hydrogène et forme en présence d'hydrogène un hydrure stable qui rend difficile la désorption de l'hydrogène.

La demande de brevet US 2002/0197181 décrit l'utilisation pour le stockage de l'hydrogène d'alliages à base de magnésium comprenant du magnésium métallique et un composé intermétallique $Mg_xM_y$, la teneur totale en magnésium dans l'alliage étant d'au moins 60 % en poids.

La demande de brevet WO 99/20422 décrit la fabrication de nanocomposites de structure nanocristalline utilisés pour le stockage d'hydrogène, préparés à partir d'un hydrure de magnésium ou d'un alliage à base de magnésium et d'un autre élément connu pour absorber l'hydrogène mais ne formant pas d'alliage avec le magnésium.

La demande de brevet EP 0 196 190 A décrit des électrodes en alliage métallique amorphe à au moins 50 % pour le stockage de l'hydrogène.

<u>Objet de l'invention</u>

La présente invention concerne un procédé de stockage réversible de l'hydrogène mettant en jeu de nouveaux matériaux cristallins potentiellement intéressants pour le stockage de l'hydrogène (théoriquement supérieur à 5 % masse) dans des conditions définies par le plateau de l'isotherme pression-température suivantes :

● 270 K < T < 370 K et

● 1 < P < 10 atm (soit environ 0,1 MPa < P < environ 10 MPa).

Ces nouveaux matériaux comprennent un système équilibré formé entre un alliage de magnésium et de palladium et l'hydrure correspondant ; ils sont plus particulièrement du type :

$$Mg_xPd \Leftrightarrow Mg_xPdH_n$$

où x est le rapport atomique Mg/Pd et n le nombre d'atomes d'hydrogène stoechiométrique de l'hydrure ou des hydrures formés. Le rapport atomique x peut prendre une valeur de 3 à 6. Pour représenter $Mg_xPdH_n$, on considère plus particulièrement la structure $Mg_2PdH_4$ en combinaison avec $MgH_2$.

Lorsque le rapport atomique prend une valeur de 7 à 9, l'hydrure en équilibre avec l'alliage de formule $Mg_xPd$ correspond plus particulièrement à la structure $Mg_2PdH_4$.

L'invention concerne également une nouvelle structure répondant à la formule $Mg_2PdH_4$.

<u>Description des dessins</u>

La Figure 1 indique les valeurs de $\Delta E_{hyd}$ calculées et les valeurs de expérimentales $\Delta H_{hyd}$ de la littérature.

La Figure 2 est de diagramme de Van't Hoff des hydrures simples utilisant les valeurs calculées de $\Delta E_{hyd}$.

La Figure 3 est le tracé des courbes de Van't Hoff pour des hydrures de type $Mg_xmH_n$ avec M = Fe, Ru ou Ni.

La Figure 4 est le spectre de diffraction des rayons X de la structure cristalline $Mg_2PdH_4$.

La Figure 5 représente l'énergie de formation $\Delta E_{hyd}$ des alliages $Mg_xPd$ en fonction de leur composition.

La Figure 6 est le tracé des droites de Van't Hoff correspondant à l'hydruration des alliages Mg-Pd

La Figure 7 représente un cycle absorption-désorption sur $Mg_6Pd$ à 100˚C.

<u>Description détaillée de l'invention</u>

Dans le procédé de stockage selon l'invention, les alliages de magnésium et palladium sont mis au contact d'hydrogène gazeux et conduisent ainsi à la formation du ou des composés hydrures correspondants (absorption l'hydrogène). En augmentant légèrement la température ou diminuant légèrement la pression d'hydrogène, l'hydrure formé restitue l'hydrogène (désorption). Il s'agit donc d'un procédé de stockage réversible.

En formant les alliages $Mg_xPd$ en équilibre avec l'hydrure (ou les hydrures) de stoechiométrie globale $Mg_xPdH_n$ sur le plateau de l'isotherme, l'ajout de l'élément palladium permet d'améliorer sensiblement les propriétés thermodynamiques de l'hydrure de magnésium simple.

Les structures de certains alliages $Mg_xPd$ sont inventoriées dans les bases ICSD et CRYSMET, la structure $Mg_2PdH_4$ non-inventoriée est résolue par la méthode de calcul décrite plus loin.

- La base ICSD (Inorganic Crystal Structure Database) est la propriété du "Fachinformationszentrum Karlsruhe (FIZ)" en Allemagne et du "National Institute of Standards and Technology (NIST)" aux USA (voir aussi http://www.icsd.ill.fr//).
- La base CRYSMET appartient à et est entretenue par "Toth Information Systems", Ottawa, et le Conseil national de recherches du Canada.

(ICSD et CRYSMET sont accessibles au sein de l'interface MedeA commercialisée par Materials Design S.a.r.l., Le Mans (France)).

De nombreuses propriétés utiles d'un matériau solide peuvent être déduites directement de la détermination de son énergie de cohésion chimique. Cette énergie de cohésion est intrinsèquement fonction de la composition chimique, de la structure atomique locale du matériau, de ses propriétés électroniques et de toutes les propriétés physiques qui en découlent. La physique quantique et plus précisément la théorie de la fonctionnelle de la densité (dont l'abréviation DFT provient de l'anglais "Density Functional Theory") fournissent une base fiable pour la prédiction quantitative des propriétés structurales, électroniques, et thermodynamiques d'une structure atomique, moléculaire ou cristalline avant toute tentative de synthèse du matériau en laboratoire (voir : W. Kohn, L.J. Sham, Phys. rev. A 140, 1133 (1965)). En particulier, le formalisme de la DFT, tel qu'il est implémenté dans de nombreux logiciels quantiques actuels tels que :

- le "Vienna Ab initio Simulation Package" (VASP) (voir : G. Kresse, J. Hafner, Phys. Rev. B 48 (1993) 13115 ; G. Kresse, J. Furthmüller, Phys. Rev. B 6 (1996) 15 ; ainsi que l'adresse URL : http://www.cms.mpi.univie.ac.at/vasp/ ; références [1]);
- "CASTEP" (voir : http://www.tcm.phy.cam.ac.uk/castep/) et
- "Gaussian" (voir : http://www.gaussian.com),

possède comme objet central la détermination de la fonction d'onde électronique d'un matériau simulé par résolution approchée de la célèbre équation de Schrödinger. L'accès à la fonction d'onde permet le développement d'une méthodologie prédictive et quantitative de la liaison chimique dans une structure atomique, moléculaire ou cristalline.

Dans la recherche de nouveaux matériaux pour le stockage de l'hydrogène, les expérimentateurs ont besoin de s'appuyer sur la connaissance et une méthodologie de la chimie du solide. Sur la base de concepts thermodynamiques tels que l'enthalpie de formation, les stabilités relatives des structures de matériaux peuvent être quantifiées en fonction des conditions de température et de pression. Les techniques modernes de calcul quantique telles que la DFT présentent l'avantage de faire appel à une connaissance minimale de données empiriques pour déterminer ces mêmes propriétés thermodynamiques. Grâce à la connaissance des constantes fondamentales de la physique, ces techniques, ainsi souvent appelées "*ab initio*", permettent donc de prédire la stabilité énergétique et les propriétés physico-chimiques d'une structure cristalline définie par sa composition et sa maille cristallographique, indépendamment de toute approche expérimentale. Au-delà, ces techniques permettent de lever des indéterminations expérimentales sur la structure d'un matériau.

L'utilisation d'hydrures intermétalliques comme matériaux de stockage de l'hydrogène est basée sur l'équilibre chimique suivant :

$$\frac{2}{n}\mathrm{M} + \mathrm{H}_2 \rightarrow \frac{2}{n}\mathrm{MH_n} \qquad\qquad (1)$$

où M représente la phase métallique stable se transformant en la phase hydrure de stoechiométrie $MH_n$.

Cette phase hydrure présente une capacité massique théorique de stockage égale à $nMH/(nMH+MM)\times100$ pour cent, où MH est la masse molaire de l'hydrogène atomique et MM celle du métal.

Les caractéristiques thermodynamiques de la transformation (1) sont décrites par un isotherme pression-température. Quand les deux phases hydrure et métal coexistent, l'isotherme présente un plateau. La température, $T$, et la pression d'équilibre, $P_{eq}$, du plateau sont déterminées par l'équation de Van't Hoff :

$$\frac{2}{n}\ln\left(\frac{P_{eq}}{P^0}\right) = \frac{\Delta H_{hyd}}{RT} - \frac{\Delta S_{hyd}}{R} \qquad (2)$$

où :

$\Delta H_{hyd}$ (respectivement $\Delta S_{hyd}$) représente la variation d'enthalpie (respectivement la variation d'entropie) de la transformation (1) ;

$R$ = 8,314510 J.mol$^{-1}$.K$^{-1}$ est la constante molaire des gaz parfaits et

$P^0$ = 1 bar est la pression standard (soit 0,1 MPa).

Cette approche peut être généralisée pour des hydrures d'alliages métalliques, AB$_x$, de la manière suivante :

$$\frac{2}{n}\,AB_x + H_2 \rightarrow \frac{2}{n}\,AB_xH_n \qquad (3)$$

où A et B sont deux éléments métalliques et x le rapport atomique B/A dans l'alliage.

Il est communément reconnu que la principale contribution au terme de variation entropique $\Delta S_{hyd}$ est la perte d'entropie de la molécule d'hydrogène passant de la phase gaz à un état adsorbé dans l'état solide de l'hydrure final. La valeur de $\Delta S_{hyd}$ est connue pour être proche de 130 J. K$^{-1}$.mol$^{-1}$ H$_2$, quel que soit l'hydrure (voir : "Hydrogen-storage Materials for Mobile Applications", L. Schlapbach, A. Züttel, Nature 414 (2001) 353-358, référence [2] ; et "Hydrogen Storage Properties of Mg Ultrafine Particles Prepared by Hydrogen Plasma-metal Reaction", H. Shao, Y. Wang, H. Xu, X. Li, Materials Science Engineering B 110 (2004) 221-226, référence [3]). Dans ce qui suit, nous avons retenu cette valeur. Selon l'équation (2), valable également pour la réaction (3), le logarithme de la pression à l'équilibre, $P_{eq}$, varie linéairement avec l'inverse de la température T. La pente de la relation linéaire est déterminée par $\Delta H_{hyd}$. Dans les exemples qui suivent, nous représenterons, grâce aux diagrammes de Van't Hoff, les variations du logarithme de $P_{eq}$ en fonction de $1/T$ (plus précisément $1000/T$ pour des raisons d'unités). De tels diagrammes permettent d'identifier les matériaux potentiellement intéressants pour le stockage de l'hydrogène dans un domaine ciblé de $P_{eq}$ et T.

En conséquence, la prédiction (par une approche théorique fiable) est d'un intérêt majeur pour la connaissance des conditions de température et de pression auxquelles le métal ou l'alliage se transforme en hydrure. Comme $\Delta H_{hyd}$ est en général exothermique (pour les hydrures stables), la pente est négative. La valeur de $\Delta H_{hyd}$ dépend étroitement de la stabilité de l'hydrure par rapport à la phase métallique ou à l'alliage : plus l'hydrure est stable thermodynamiquement, plus la réaction (1) ou (3) est exothermique.

L'enthalpie de formation de l'hydrure, $\Delta H_{hyd}$, peut s'exprimer en fonction de la variation d'énergie interne au cours de l'hydruration, $\Delta E_{hyd}$ :

$$\Delta E_{hyd} = E_{AB_xH_n} - E_{AB_x} - E_{H_2} \qquad (4)$$

où $E$ représente l'énergie interne des phases hydrure, métal et de la molécule d'hydrogène en phase gaz. L'énergie interne d'un matériau est liée aux interactions entre les centres atomiques constituant le matériau et les électrons. Cette énergie est aussi souvent appelée énergie électronique et est directement reliée à l'énergie de cohésion du matériau. L'expression de $\Delta H_{hyd}$ en fonction de $\Delta E_{hyd}$ est la suivante :

$$\Delta H_{hyd} = \Delta E_{hyd} + P\Delta V + \Delta ZPE + T\Delta c_p \qquad (5)$$

où

$\Delta c_p$ représente la variation de capacité calorifique entre la phase hydrure et la phase métallique,

$\Delta ZPE$ est la variation d'énergie au point zéro entre la phase hydrure et la phase métallique et

$\Delta V$ est la variation de volume molaire entre la phase hydrure et la phase métallique.

Les techniques modernes de simulation quantique permettent de calculer de façon systématique les valeurs de $E_{AB_xH_n}$, $E_{AB_x}$ et $E_{H_2}$ et donc d'en déduire la valeur de $\Delta E_{hyd}$. Pour une phase cristalline donnée (connue ou inconnue de façon expérimentale), la structure cristallographique initiale est déterminée par le groupe d'espace, les paramètres de la cellule primitive et les positions atomiques dans la maille de la cellule primitive. Pour les structures existantes, les bases de données cristallographiques telles que ICSD et CRYSMET fournissent ces renseignements.

Pour les nouvelles structures (inconnues ou non totalement résolues expérimentalement), la même description standard sera adoptée dans la présente invention. Nous ajouterons également la simulation du spectre de diffraction aux rayons X (DRX), communément utilisé expérimentalement pour caractériser les structures observées.

Pour toute structure (connue ou nouvelle), le processus de simulation rigoureux est adopté afin de déterminer l'état dit fondamental de la structure, c'est-à-dire l'état stable de la structure. C'est dans cet état fondamental que les valeurs de $E_{AB_xHn}$, $E_{AB_x}$, $E_{H_2}$ et de $\Delta E_{hyd}$ sont calculées. Ce processus permet notamment de déterminer la fonction d'onde électronique du système en optimisant la structure cristalline pour les solides hydrure, métallique et la molécule d'hydrogène grâce aux techniques modernes de simulation quantique au niveau DFT (avec une fonctionnelle du type GGA, "Generalized Gradient Approximation"), accessible dans des logiciels tels que VASP (voir plus haut références [1]). A cette fin, les critères suivants sont imposés lors du calcul :

- le critère de convergence de l'énergie électronique doit être fixé à 0,01 kJ/mol de cellule primitive,
- le critère de convergence des positions atomiques et celui du volume de la cellule primitive du solide doivent conduire à une précision énergétique de 0,1 kJ par mole de cellule primitive,
- la grille de points-k utilisée pour décrire la zone de Brillouin doit être suffisamment grande pour garantir une fluctuation de l'énergie électronique plus faible que 0,01 kJ par mole de cellule,
- la taille de la base d'ondes planes utilisée ou la précision de la base utilisée doit assurer une convergence de l'énergie électronique supérieure à 0,1 kJ par mole de cellule primitive.

Pour les applications de stockage de l'hydrogène embarqué, il est généralement recherché une température à l'équilibre proche de 300 K (1000/T # 3,3 K$^{-1}$) pour une pression proche de 1 atm (environ 0,1 MPa). En raison de l'équation (2), cela correspond à une valeur de $\Delta H_{hyd}$ proche de -39 kJ par mole d'hydrogène. Pour la présente invention, et en raison de la précision de l'approche de simulation définie précédemment, nous qualifierons de matériaux potentiellement intéressants pour le stockage de l'hydrogène, tous les matériaux dont le plateau de l'isotherme vérifie les conditions suivantes :

$$\bullet \quad 270 < T < 370 \text{ K (soit } 2,7 < 1000/T < 3,7 \text{ K}^{-1})$$

et

$$\bullet \quad 1 < P_{eq} < 10 \text{ atm (soit environ 0,1 MPa} < P_{eq} < \text{environ 10 MPa).}$$

$$(6)$$

La fenêtre cible matérialisant ce domaine sera représentée sur tous les diagrammes de Van't Hoff dans les exemples qui suivent.

Selon l'invention, l'alliage peut comprendre en outre, en proportion inférieure à 5 % en poids au moins l'élément N ou un métal de transition léger des groupes 3 à 12 du tableau périodique des éléments par exemple parmi Sc, Ti, V, Cr, Mn, Fe, Co, Ni, Cu et Zn.

L'alliage de magnésium et de palladium de l'invention peut se présenter sous forme massive ou sous forme dispersée, obtenue par exemple par broyage.

Le procédé est appliqué par exemple au stockage d'hydrogène embarqué, stationnaire ou portable.

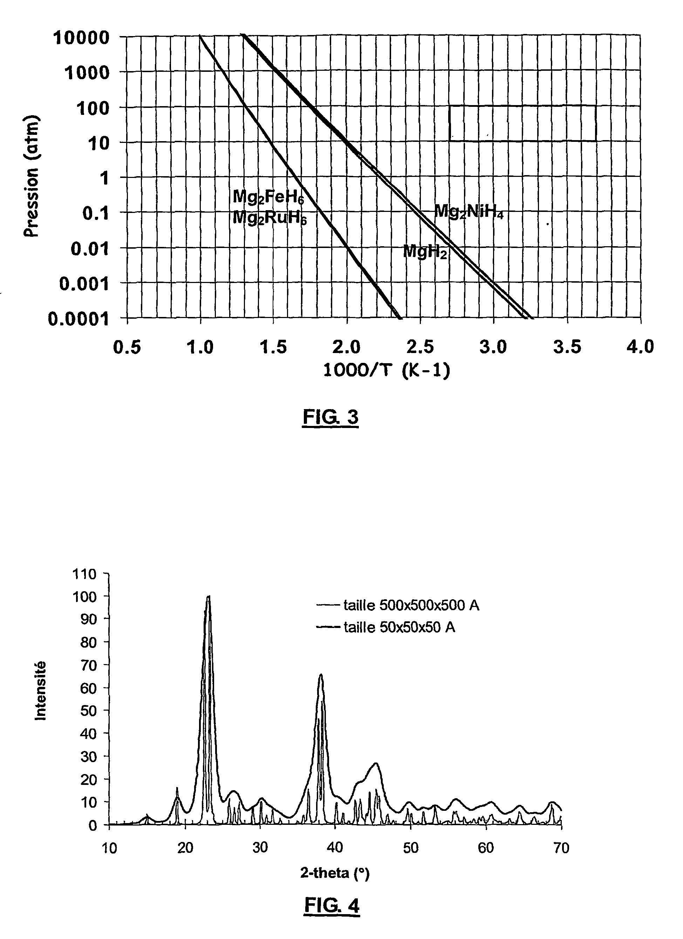

L'invention concerne également une nouvelle structure répondant à la formule $Mg_2PdH_n$ et plus particulièrement une nouvelle structure répondant à la formule $Mg_2PdH_4$. La définition de la structure pour $Mg_2PdH_4$ est fournie dans le Tableau 6 et son spectre de diffraction X est fourni à la Figure 4.

Exemples

Parmi les exemples suivants, les Exemples 1 et 2 sont donnés à titre de comparaison et les Exemple 3 et 4 illustrent l'invention.

Exemple 1 (comparatif) : Cas connu des hydrures simples

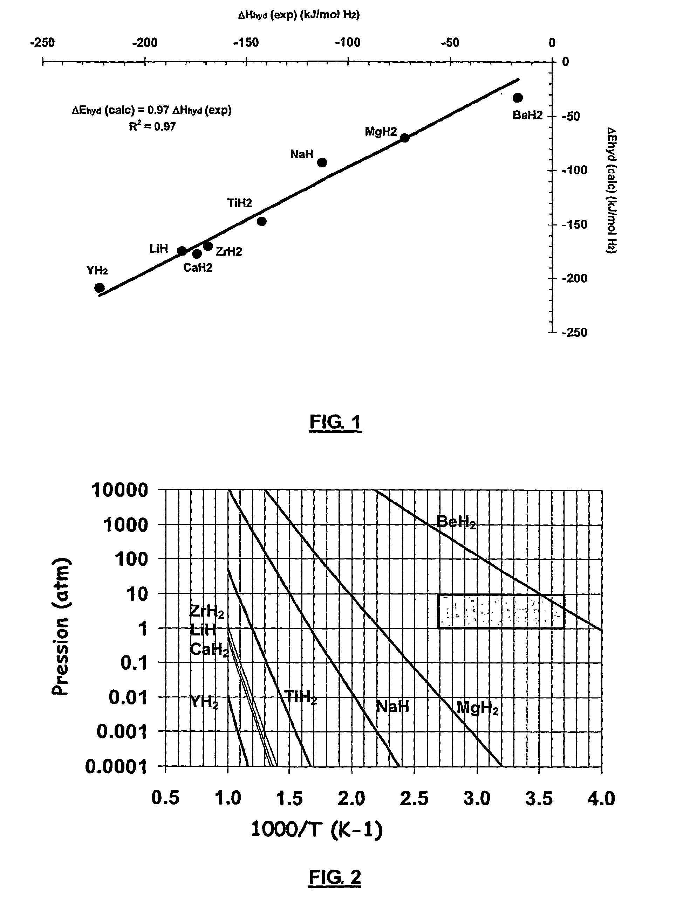

Le diagramme de la Figure 1 trace les valeurs de $\Delta E_{hyd}$ calculées selon le processus décrit précédemment et les valeurs expérimentales $\Delta H_{hyd}$ de la littérature (voir : "CRC Handbook of Chemistry and Physics", 76th Edition 1995-1996, David R. Lide Editor-in-Chief, CRC Press).

Les structures cristallographiques utilisées sont celles des phases hydrures et métalliques stables dans les conditions proches de celles énoncées plus haut en (6). Elles sont reportées dans le Tableau 1.

Tableau 1 : Propriétés structurales et capacité massique des hydrures simples simulés.

| Hydrure | Référence cristallographique | Groupe d'espace | % masse | Équation bilan |
|---|---|---|---|---|
| LiH | ICSD.61751 | FM3-M | 22,37 | $2Li+H_2 \rightarrow 2LiH$ |
| NaH | ICSD.33670 | FM3-M | 8,00 | $2Na+H_2 \rightarrow 2NaH$ |
| $BeH_2$ | ICSD.84231 | IBAM | 18,17 | $Be+H_2 \rightarrow BeH_2$ |
| $MgH_2$ | ICSD.26624 | P42/MNM | 7,60 | $Mg+H_2 \rightarrow MgH_2$ |
| $CaH_2$ | ICSD.23870 | PNMA | 4,75 | $Ca+H_2 \rightarrow CaH_2$ |
| $YH_2$ | CRYSMET.36093 | Fm-3m | 2,20 | $Y+H_2 \rightarrow YH_2$ |
| $TiH_2$ | CRYSMET.38081 | Fm-3m | 4,01 | $Ti+H_2 \rightarrow TiH_2$ |
| $ZrH_2$ | CRYSMET.39242 | I4/mmm | 2,15 | $Zr+H_2 \rightarrow ZrH_2$ |

Le résultat de la Figure 1 montre qu'il existe une relation linéaire entre les deux grandeurs fondamentales expérimentale $\Delta H_{hyd}$ et calculée $\Delta E_{hyd}$ sur une large échelle d'hydrures représentatifs. Ces exemples montrent également que la grandeur calculée $\Delta E_{hyd}$ est un bon descripteur thermodynamique pour prédire les propriétés thermodynamiques de matériaux en vue du stockage de l'hydrogène. La précision finale sur l'énergie est de l'ordre de 3 à 5 % ce qui est en accord avec la méthode de calcul utilisée et le processus décrit précédemment.

La Figure 2 représente la traduction de ces valeurs sur le diagramme de Van't Hoff en utilisant les valeurs calculées de $\Delta E_{hyd}$. Comme cela est connu expérimentalement, aucun des hydrures simples du Tableau 1 (à l'exception de $BeH_2$, qui présente d'autres difficultés d'exploitation) ne permet de s'approcher de la fenêtre cible définie précédemment, qui permet d'envisager l'utilisation de ces matériaux pour le stockage de l'hydrogène.

Par exemple, le cas de l'hydrure de magnésium servant de référence à ce qui suit, révèle que $\Delta H_{hyd}(MgH_2)$ est égale à -75,0 kJ par mole d'$H_2$ (voir plus haut références [2] et [3]). Le calcul fournit une valeur très proche, de l'ordre de -70,2 kJ par mole d'$H_2$. La température d'équilibre à pression atmosphérique est de 575 K expérimentalement (voir référence [2]), ce qui est beaucoup trop élevé pour pouvoir être exploitable.

Exemple 2 (comparatif) : Cas des hydrures d'alliages à base de magnésium $Mg_xMH_n$ où M est un métal de transition du type Ni, Fe ou Ru

Afin de modifier les propriétés thermodynamiques de l'hydrure de magnésium de référence, il peut être envisagé de lui ajouter un second élément, pouvant être considéré comme un « dopant thermodynamique » du système hydrure de magnésium. En pratique, il est recherché la formation d'un alliage de type $Mg_xM$. Un élément souvent proposé dans la littérature est le nickel, qui constitue la phase alliage $Mg_2Ni$. La réaction de formation de l'hydrure à partir de l'alliage s'écrit dans ce cas :

$$\tfrac{1}{2}\, Mg_2Ni + H_2 \rightarrow \tfrac{1}{2}\, Mg_2NiH_4 \qquad (7)$$

Expérimentalement, l'enthalpie d'hydruration de l'alliage $\Delta H_{hyd}$ est égale à -64,5 kJ par mole. Le calcul quantique, selon le processus défini précédemment, conduit à une valeur très compatible de $\Delta E_{hyd}$, égale à -66,7 kJ par mole d'$H_2$. Cette valeur inclut le calcul de l'énergie électronique des deux phases $Mg_2Ni$ et de $Mg_2NiH_4$ dont les structures issues de la base CRYSMET sont reportées dans les Tableaux 2 et 3.

Tableau 2 : Propriétés structurales et capacité massique des hydrures de type $Mg_xMH_n$, avec M = Ni

| Hydrure | Référence cristallographique | Groupe d'espace | % masse | Équation bilan |
|---|---|---|---|---|
| $Mg_2NiH_4$ | CRYSMET.865285 | C2/c | 3.59 | $1/2Mg_2Ni^+H_2 \rightarrow 1/2NiMg_2H_4$ |

Tableau 3 : Propriétés structurales des alliages de type $Mg_aM$ avec M = Ni

| Formule | Référence cristallographique | Groupe d'espace |
|---|---|---|
| $Mg_2Ni$ | CRYSMET.24598 | P6222 |

Du point de vue méthodologique, ce résultat confirme tout d'abord que le descripteur quantique $\Delta E_{hyd}$ est adapté à l'exploration de phases hydrures les plus complexes comme les hydrures d'alliage.

Du point de vue applicatif, la conséquence connue est que le nickel se révèle n'être qu'un modeste dopant thermodynamique. Pour un ratio atomique Ni/Mg élevé (égal à 1/3 dans $Mg_2NiH_4$), une faible augmentation de $\Delta H_{hyd}$ est observée : +10 kJ par mole d'$H_2$ (+3,5 kJ par mole d'$H_2$ pour la valeur de $\Delta E_{hyd}$). Ceci résulte en un faible effet sur la température du plateau de l'isotherme à pression atmosphérique : elle reste de l'ordre de 500 à 525 K (voir référence [2] plus haut, ainsi que : "A Panoramic Overview of Hydrogen Storage Alloys From A Gas Reaction Point Of View", G. Sandrock, Journal of Alloys and Compounds 293-295 (1999) 877-888). En conséquence, il y a peu de chances de pouvoir améliorer les propriétés thermodynamiques de l'hydrure de magnésium grâce à l'ajout de nickel.

Deux autres hydrures d'alliages constitués de l'élément magnésium et de Fe ou Ru, ont été simulés : ils correspondent aux structures reportées dans le Tableau 4 ci-dessous.

Tableau 4 : Propriétés structurales et capacité massique des hydrures de type $Mg_xMH_n$, avec M = Ru ou Fe

| Hydrure | Référence cristallographique | Groupe d'espace | % masse | Équation bilan |
|---|---|---|---|---|
| $Mg_2RuH_6$ | CRYSMET.58330 | Fm-3m | 3.85 | $1/6Mg_3Ru_2+1/6Mg+H_2 \rightarrow 1/3RuMg_2H_6$ |
| $Mg_2FeH_6$ | isomorphe à $Mg_2RuH_6$ | Fm-3m | 5.43 | $1/3Fe+2/3Mg+H_2 \rightarrow 1/3FeMg_2H_6$ |

Les structures des alliages (lorsqu'ils existent) correspondant aux hydrures du Tableau 4 sont fournies dans le Tableau 5. Aucune structure stable d'alliage Mg-Fe n'est connue à ce jour dans les diagrammes de phase thermodynamique Mg-Fe (voir : O. Kubaschewski "Fe-Mg; Iron-Magnesium"; pp 59-60 of volume "Iron - Binary phase diagrams" ; Springer-Verlag, 1982). Ceci justifie le fait que les éléments Fe et Mg ont été considérés dans l'équation bilan du Tableau 2. Pour la structure d'hydrure du Mg-Fe, nous avons considéré l'homologue à $Mg_2RuH_6$ référencée dans la base CRYSMET. Ce choix se justifie en partie par la position du Fe et du Ru localisé sur une même colonne du tableau périodique des éléments. Par ailleurs, le calcul d'optimisation de la structure en suivant le processus décrit précédemment montre que cette structure est stable thermodynamiquement et que la valeur de $\Delta E_{hyd}$ est égale à -94,4 kJ par mole d'$H_2$.

Tableau 5 : Propriétés structurales des alliages de type $Mg_xM$ avec M = Ru

| Formule | Référence cristallographique | Groupe d'espace |
|---|---|---|
| $Mg_3Ru_2$ | CRYSMET.27192 | P4132 |

Le tracé des courbes de Van't Hoff (Figure 3) dans le cas de ces matériaux révèle que ni le fer, ni le ruthénium ne sont susceptibles d'être des dopants thermodynamiques du système magnésium. En raison des valeurs de $\Delta E_{hyd}$ égale à -94,4 kJ par mole d'$H_2$ pour Fe, et -95,2 kJ par mole d'$H_2$ pour Ru, les deux hydrures se situent sur des droites de Van't Hoff quasiment confondues et s'écartant de la zone ciblée pour les applications par rapport à l'hydrure de magnésium pur. Dans le cas de $Mg_2FeH_6$, notre simulation est en accord avec les résultats publiés récemment et révélant un effet négatif du Fe sur les propriétés thermodynamiques de l'hydrure de magnésium initial (voir: "Materials for Hydrogen Storage" ; Andreas Züttel, Materials Today 6 (2003) 24-33).

Aucun de ces matériaux ne présente donc d'intérêt pour le stockage.

Exemple 3 : Cas de l'hydrure $Mg_xPdH_n$

Le cas exploré dans cet exemple selon l'invention concerne l'hydrure d'alliages métalliques constitués des éléments magnésium et palladium. Il n'existe pas de structures cristallographiques connues (référencées dans les bases cristallographiques) pour un hydrure du type $Mg_2PdH_4$ (analogue de $Mg_2NiH_4$). Par analogie avec le système Mg-Ni-H, nous avons donc construit la structure de cet hydrure en considérant une structure isomorphe à $Mg_2NiH_4$ de même groupe d'espace C2/c que la structure stable de $Mg_2NiH_4$, référencée CRYSMET.865285.

La substitution du nickel par le palladium nécessite une optimisation des positions atomiques ainsi que des paramètres de la cellule selon le processus de simulation décrit précédemment. Le résultat de cette optimisation conduit à la définition de la structure pour $Mg_2PdH_4$ fournie dans le Tableau 6 et dont le spectre DRX est fourni sur la Figure 4.

Tableau 6 : Définition de la maille de $Mg_2PdH_4$

| Groupe d'espace | C2/c | | |
|---|---|---|---|
| Paramètres de la cellule monoclinique | a = 15,03310 | b = 6,55584 | c = 6,71647 |
| | $\alpha$ = 90,00 | $\beta$ = 113,77 | $\gamma$ = 90,00 |
| Elément | X | Y | Z |
| Pd (8f) | 0,12162 | 0,27220 | 0,07139 |
| Mg (8f) | 0,26519 | 0,00562 | 0,08072 |
| Mg (4e) | 0,00000 | 0,46188 | 0,25000 |
| Mg (4e) | 0,00000 | -0,02846 | 0,25000 |
| H (8f) | 0,22136 | 0,20452 | 0,30980 |
| H (8f) | 0,13871 | -0,13907 | 0,36936 |
| H (8f) | 0,00945 | 0,20110 | 0,06685 |
| H (8f) | 0,12291 | 0,46990 | 0,55214 |

Concernant les alliages Mg-Pd, il existe plusieurs phases et structures cristallographiques inventoriées dans la littérature (voir : A.A. Nayeb-Hashemi, J.B. Clark "The Mg-Pd (Magnesium-Palladium) System", Bull. Alloy Phase Diagrams 6(2) (1985) 164-167). Ces structures sont reportées dans le Tableau 7. Quatre phases sont de structures bien définies : MgPd, $Mg_5Pd_2$, $Mg_3Pd$ et $Mg_{6.08}Pd$. Ce sont celles-là que nous avons utilisées pour les calculs de $\Delta E_{hyd}$.

Tableau 7 : Propriétés structurales des alliages de type $Mg_xPd$.

| Formule | x | Référence cristallographique | Groupe d'espace |
|---|---|---|---|
| MgPd | 1 | prototype CsCl CRYSMET.31642 | Pm-3m |
| $Mg_5Pd_2$ | 2,5 | prototype $Co_2Al_5$ ICSD.30207 | P63/mmc |
| $Mg_3Pd$ | 3 | isomorphe $AsNa_3$ CRYSMET.85519 | P63/mmc |
| $Mg_4Pd$ | 4 | non résolue | inconnue |
| $Mg_{6,08}Pd$ | 6,08 | ICSD.2750 | F4-3m |

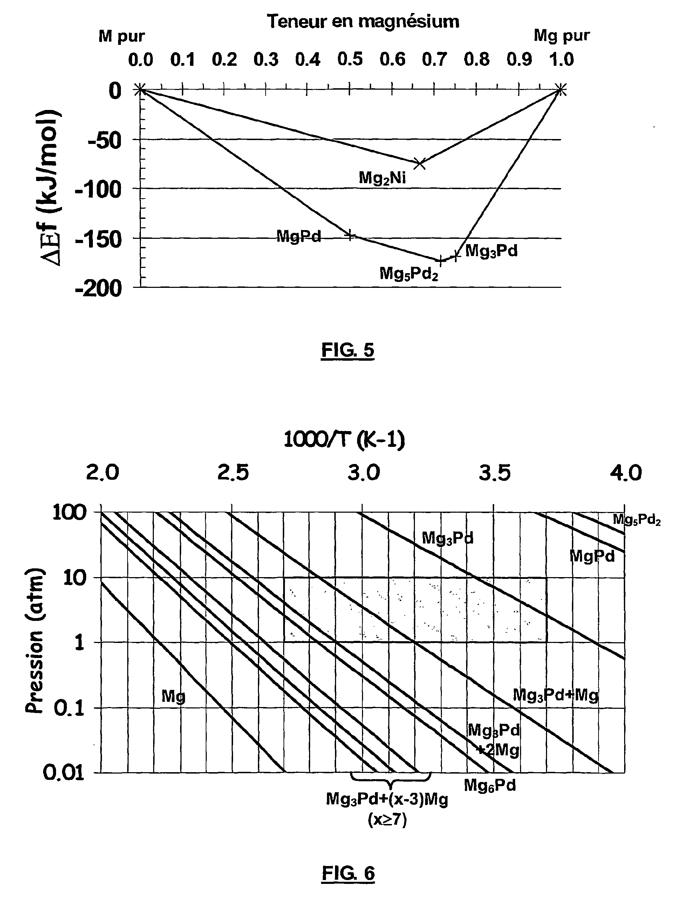

Les simulations DFT permettent premièrement de vérifier la stabilité des alliages grâce au tracé du diagramme de la Figure 5 en fonction de la composition des alliages. Ce diagramme exprime l'énergie de formation des alliages, $\Delta E_f$, calculée par rapport aux éléments. $\Delta E_f$ se calcule de manière analogue à $\Delta E_{hyd}$ en l'absence d'hydrogène. Il révèle en particulier que l'énergie de formation des alliages Mg-Pd est significativement plus élevée que celle de l'alliage $Mg_2Ni$. Ce résultat aura un effet quantitatif sur la valeur de $\Delta E_{hyd}$ correspondant aux transformations d'hydruration.

La stabilité de la nouvelle structure hydrure $Mg_2PdH_4$ par rapport aux éléments métalliques (Mg ou Pd) est testée grâce au bilan suivant :

$$Pd + 2Mg + 2H_2 \rightarrow Mg_2PdH_4 \qquad (8)$$

La valeur calculée de la variation d'énergie, $\Delta E_{hyd}$, de cette réaction est de -100,3 kJ par mole d'hydrogène. Cette valeur énergétique, comparable à celle pour $Mg_2NiH_4$ (-104,17 kJ par mole d'hydrogène), confirme la stabilité thermodynamique de $Mg_2PdH_4$ vis-à-vis de ses éléments.

L'éventuelle ségrégation du Pd hors de la phase $Mg_2PdH_4$ peut s'exprimer grâce au bilan chimique suivant :

$$Mg_2PdH_4 \rightarrow Pd + 2MgH_2 \qquad (9)$$

La valeur calculée du bilan énergétique de (9) est +60,3 kJ par mole de palladium, ce qui montre que cette ségrégation n'est pas possible et que la structure $Mg_2PdH_4$ est thermodynamiquement stabilisée par rapport à l'hydrure de magnésium et au palladium métallique.

La détermination des nouvelles propriétés thermodynamiques de l'hydrure $Mg_2PdH_4$ en vue de l'utilisation pour le stockage de l'hydrogène nécessite le calcul quantique de $\Delta E_{hyd}$ selon le processus précédemment établi. Suivant la composition finale de la phase hydrure et notamment selon le pourcentage massique en hydrogène théorique stocké, les propriétés thermodynamiques sont modifiées. Les Tableaux 8 et 9 montrent les variations de $\Delta E_{hyd}$ en fonction du pourcentage massique en hydrogène stocké.

Tableau 8 : Équations chimiques de l'hydruration du système Mg-Pd et capacité massique de stockage en fonction de x

| $Mg_xPd$ | % masse | Équations chimiques | $\Delta E_{\eta\psi\delta}$ (kJ/mol $H_2$) |
|---|---|---|---|
| x = 1 | 2,52 | $\frac{1}{2}MgPd + \frac{1}{2}Mg + H_2 \rightarrow \frac{1}{2}Mg_2PdH_4$ | -26,6 |
| x = 2,5 | 3,12 | $\frac{1}{5}Mg_5Pd_2 + H_2 \rightarrow \frac{2}{5}Mg_2PdH_4 + \frac{1}{5}MgH_2$ | -24,8 |
| x = 3 | 3,24 | $\frac{1}{3}Mg_3Pd + H_2 \rightarrow \frac{1}{3}Mg_2PdH_4 + \frac{1}{3}MgH_2$ | -34,0 |
| x ≥ 7 | %(x) | $\frac{1}{x}Mg_3Pd + \left(1 - \frac{3}{x}\right)Mg + H_2 \rightarrow \frac{1}{x}Mg_2PdH_4 + \left(1 - \frac{2}{x}\right)MgH_2$ (*) | $\Delta E_{\eta\psi\delta}(X)$ |

(*) Formule générale utilisée pour x ≥ 7, dans le cas où l'alliage $Mg_xPd$ n'existe pas et en considérant un mélange $Mg_3Pd$ et Mg. (Cette formule est également valable pour x ≥ 3).

Tableau 9 : Teneur massique et enthalpie d'hydruration pour mélange $Mg_3Pd$ et Mg en fonction de x

| x | % masse | $\Delta E_{\eta\psi\delta}$ (kJ/mol $H_2$) |
|---|---|---|
| 7 | 4,82 | -54,6 |
| 8 | 5,05 | -56,5 |
| 9 | 5,24 | -58,1 |

La Figure 6 montre les droites de Van't Hoff correspondant à l'hydruration des alliages Mg-Pd pour les différents cas envisagés dans les Tableaux 8 et 9.

Ce diagramme révèle clairement que le palladium joue le rôle de dopant thermodynamique pour l'hydrure de magnésium. Les droites de Van't Hoff correspondant aux équilibres pour x = 1 et 2,5 déplacent sensiblement les propriétés thermodynamiques du système hors de la fenêtre cible. Les cas correspondants aux équilibres (x = 3 à 6) traversent la zone cible en pression et température [voir relations (6)] matérialisant un champ d'application possible de ce système pour le stockage de l'hydrogène. Les cas x = 7, 8 ou 9 peuvent être également retenus du point de vue thermodynamique. Dans ces conditions, la capacité massique de stockage pour des valeurs (x = 3 à 9) est élevée et comprise entre 3,24 %, et 5,24 %. Nous avons donc trouvé des systèmes potentiellement utilisables pour le stockage de l'hydrogène.

Le stockage de l'hydrogène dans ces conditions thermodynamiques favorables est donc lié à la réaction d'hydruration des alliages de Mg-Pd en hydrure contenant la structure trouvée $Mg_2PdH_4$ définie précédemment.

Exemple 4

Des poudres d'alliage MgPd ont été élaborées et comparées à une poudre commerciale de magnésium pur.

L'élaboration de l'alliage $Mg_6Pd$ a été réalisée par fusion de quantités adéquates de magnésium et de palladium dans un creuset. Un chauffage par induction est appliqué et un pyromètre permet le suivi de la température pendant la fusion de l'alliage.

Afin d'obtenir la composition $Mg_6Pd$, 8,4323g de Pd ont été fondus avec 11,5588g de Mg (pourcentage massique de palladium de 42,18 %).

L'alliage ainsi obtenu a ensuite été broyé dans un broyeur planétaire afin d'obtenir une nanopoudre $Mg_6Pd$ de granulométrie d'environ 50 nm.

Une caractérisation de la poudre par diffraction X est ensuite réalisée : les pics de diffraction correspondent à la référence ICSD.2750 (groupe d'espace F4-3M).

La thermogravimétrie sous pression est utilisée pour caractériser les propriétés de stockage de l'hydrogène et pour mesurer les propriétés cinétiques et thermodynamiques de l'hydruration et de la déshydruration des poudres de magnésium commercial et d'alliage magnésium-palladium $Mg_6Pd$ élaboré comme indiqué ci-dessus. La thermobalance utilisée est à suspension magnétique permettant d'opérer entre 1 et 100 bars d'hydrogène et pour des températures de 20 à 1100°C avec une résolution de 1 $\mu$g.

Cette caractérisation est réalisée à 200°C sous 0,5 MPa d'hydrogène.

Tableau 10

| Poudre | % massique H stocké au bout de 72 heures |
|---|---|
| Mg pur commercial | 0 |
| $Mg_6Pd$ | > 2,1 |

Ces résultats indiquent clairement que le palladium joue le rôle de dopant.

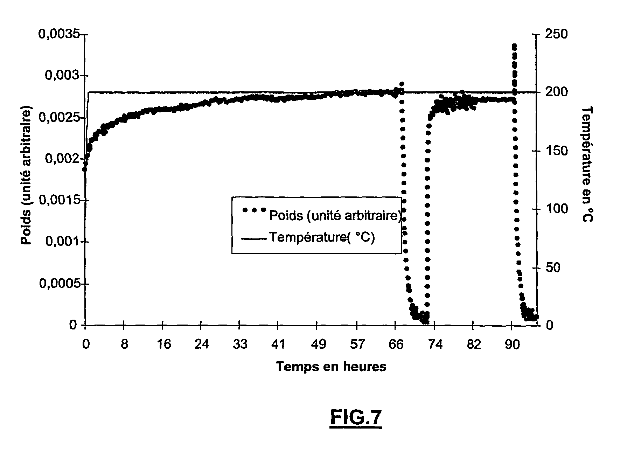

Des cycles absorption (sous 0,5 MPa d'hydrogène) - désorption d'hydrogène ont également été réalisés à 200°C. Comme l'indique la Figure 7 une très bonne réversibilité est obtenue avec cet alliage magnésium-palladium.

**Revendications**

1. Procédé de stockage réversible d'hydrogène comprenant la mise en contact d'un alliage de magnésium et de palladium avec de l'hydrogène gazeux conduisant à la formation de l'hydrure ou des hydrures correspondants, **caractérisé en ce que** l'on met en jeu un système équilibré répondant à la formule :

$$Mg_xPd \Leftrightarrow Mg_xPdH_n$$

dans laquelle le rapport atomique x prend une valeur de 3 à 6 et n est le nombre d'atomes d'hydrogène correspondant à la stoechiométrie de l'hydrure ou des hydrures formés.

2. Procédé de stockage réversible d'hydrogène comprenant la mise en contact d'un alliage de magnésium et de palladium avec de l'hydrogène gazeux conduisant à la formation d'un mélange contenant la phase hydrure $Mg_2PdH_4$ et d'autres hydrures correspondants, **caractérisé en ce que** l'on met en jeu un système équilibré répondant à la formule :

$$Mg_xPd \Leftrightarrow Mg_2PdH_4 + Mg_{x-2}H_n$$

dans laquelle le rapport atomique x prend une valeur de 7 à 9 et n est le nombre d'atomes d'hydrogène correspondant à la stoechiométrie de l'hydrure ou des hydrures formés.

3. Procédé selon la revendication 1 ou 2 **caractérisé en ce que** l'alliage mis en jeu comprend en outre, en proportion inférieure à 5 % en poids, au moins l'élément N ou un métal de transition des groupes 3 à 12 du tableau périodique des éléments choisi parmi Sc, Ti, V, Cr, Mn, Fe, Co, Ni, Cu et Zn.

4. Procédé selon l'une des revendications 1 à 3 **caractérisé en ce que** l'alliage de magnésium et palladium se présente sous forme massive.

5. Procédé selon l'une des revendications 1 à 3 **caractérisé en ce que** l'alliage de magnésium et palladium se présente sous forme dispersée.

6. Procédé selon la revendication 5 **caractérisé en ce que** l'alliage de magnésium et palladium est obtenu par broyage.

7. Procédé selon l'une des revendications 1 à 6 appliqué au stockage d'hydrogène embarqué.

8. Procédé selon l'une des revendications 1 à 6 appliqué au stockage stationnaire.

**9.** Procédé selon l'une des revendications 1 à 6 appliqué au stockage portable.

**10.** Nouvelle structure cristalline répondant à la formule Mg$_2$PdH$_4$ et appartenant au groupe d'espace C2/c.

**Claims**

**1.** Process for reversible storage of hydrogen comprising bringing into contact an alloy of magnesium and palladium with the gaseous hydrogen leading to the formation of hydride or corresponding hydrides, **characterized in that** a balanced system corresponding to the formula:

$$Mg_xPd \Leftrightarrow Mg_xPdH_n$$

in which atomic ratio x takes on a value of 3 to 6, and n is the number of hydrogen atoms corresponding to the stoichiometry of the hydride or hydrides formed, is used.

**2.** Process for reversible storage of hydrogen comprising bringing into contact an alloy of magnesium and palladium with the gaseous hydrogen leading to the formation of a mixture containing the Mg$_2$PdH$_4$ hydride phase and other corresponding hydrides, wherein a balanced system corresponding to the formula:

$$Mg_xPd \Leftrightarrow Mg_2PdH_4 + Mg_{x-2}H_n$$

in which the atomic ratio x takes on a value of 7 to 9, and n is the number of hydrogen atoms corresponding to the stoichiometry of the hydride or formed hydrides is used.

**3.** Process according to claim 1 or 2, wherein the alloy that is used also comprises, in a proportion that is less than 5% by weight, at least the element N or a transition metal of groups 3 to 12 of the periodic table selected from among Sc, Ti, V, Cr, Mn, Fe, Co, Ni, Cu and Zn.

**4.** Process according to one of claims 1 to 3, wherein the alloy of magnesium and palladium comes in solid form.

**5.** Process according to one of claims 1 to 3, wherein the alloy of magnesium and palladium comes in dispersed form.

**6.** Process according to claim 5, wherein the alloy of magnesium and palladium is obtained by grinding.

**7.** Process according to one of claims 1 to 6, applied to the storage of on-board hydrogen.

**8.** Process according to one of claims 1 to 6, applied to stationary storage.

**9.** Process according to one of claims 1 to 6, applied to portable storage.

**10.** New crystalline structure corresponding to formula Mg$_2$PdH$_4$ and belonging to space group C2/c.

**Patentansprüche**

**1.** Verfahren zur umkehrbaren Speicherung von Wasserstoff, umfassend das Inkontaktbringen einer Legierung aus Magnesium und Palladium mit gasförmigem Wasserstoff, wobei das entsprechende Hydrid oder die entsprechenden Hydride gebildet werden, **dadurch gekennzeichnet, dass** ein Gleichgewichtssystem nach der folgenden Formel zum Einsatz kommt:

$$Mg_xPd \leftrightarrow Mg_xPdH_n$$

wobei das Atomverhältnis x einen Wert von 3 bis 6 annimmt und n die Anzahl an Wasserstoffatomen ist, die der Stöchiometrie des gebildeten Hydrids oder der gebildeten Hydride entspricht.

**2.** Verfahren zur umkehrbaren Speicherung von Wasserstoff, umfassend das Inkontaktbringen einer Legierung aus Magnesium und Palladium mit gasförmigem Wasserstoff, wobei eine Mischung gebildet wird, welche die Hydrid-

phase $Mg_2PdH_4$ und weitere entsprechende Hydride enthält, **dadurch gekennzeichnet, dass** ein Gleichgewichtssystem nach der folgenden Formel zum Einsatz kommt:

$$Mg_xPd \leftrightarrow Mg_2PdH_4\ Mg_{x-2}H_n$$

wobei das Atomverhältnis x einen Wert von 7 bis 9 annimmt und n die Anzahl an Wasserstoffatomen ist, die der Stöchiometrie des gebildeten Hydrids oder der gebildeten Hydride entspricht.

3. Verfahren gemäß den Ansprüchen 1 oder 2, **dadurch gekennzeichnet, dass** die eingesetzte Legierung unter anderem, zu einem Gewichtsanteil von weniger als 5 %, mindestens das Element N oder ein Übergangsmetall aus den Gruppen 3 bis 12 des Periodensystems, ausgewählt aus Sc, Ti, V, Cr, Mn, Fe, Co, Ni, Cu und Zn, umfasst.

4. Verfahren gemäß einem der Ansprüche 1 bis 3, **dadurch gekennzeichnet, dass** die Legierung aus Magnesium und Palladium in massiver Form vorliegt.

5. Verfahren gemäß einem der Ansprüche 1 bis 3, **dadurch gekennzeichnet, dass** die Legierung aus Magnesium und Palladium in disperser Form vorliegt.

6. Verfahren gemäß dem Anspruch 5, **dadurch gekennzeichnet, dass** die Legierung aus Magnesium und Palladium durch einen Zerkleinerungsvorgang erhalten wird.

7. Verfahren gemäß einem der Ansprüche 1 bis 6, welches zur Wasserstoffspeicherung in Fahrzeugen eingesetzt wird.

8. Verfahren gemäß einem der Ansprüche 1 bis 6, welches zur Speicherung in stationären Anwendungen eingesetzt wird.

9. Verfahren gemäß einem der Ansprüche 1 bis 6, welches zur Speicherung in tragbaren Anwendungen eingesetzt wird.

10. Neuartige Kristallstruktur, die der Formel $Mg_2PdH_4$ entspricht und zur Raumgruppe C2/c gehört.

**FIG. 1**

**FIG. 2**

**FIG. 3**

**FIG. 4**

**Teneur en magnésium**

FIG. 5

FIG. 6

**FIG.7**

# EP 1 851 167 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020197181 A
- WO 9920422 A
- EP 0196190 A

**Littérature non-brevet citée dans la description**

- **W. KOHN ; L.J. SHAM.** *Phys. rev. A,* 1965, vol. 140, 1133
- **G. KRESSE ; J. HAFNER.** *Phys. Rev. B,* 1993, vol. 48, 13115
- **G. KRESSE ; J. FURTHMÜLLER.** *Phys. Rev. B,* 1996, vol. 6, 15
- **L. SCHLAPBACH ; A. ZÜTTEL.** Hydrogen-storage Materials for Mobile Applications. *Nature,* 2001, vol. 414, 353-358
- **H. SHAO ; Y. WANG ; H. XU ; X. LI.** Hydrogen Storage Properties of Mg Ultrafine Particles Prepared by Hydrogen Plasma-metal Reaction. *Materials Science Engineering B,* 2004, vol. 110, 221-226
- CRC Handbook of Chemistry and Physics. CRC Press, 1995
- **G. SANDROCK.** A Panoramic Overview of Hydrogen Storage Alloys From A Gas Reaction Point Of View. *Journal of Alloys and Compounds,* 1999, vol. 293-295, 877-888
- Fe-Mg; Iron-Magnesium''; pp 59-60 of volume. **O. KUBASCHEWSKI.** Iron - Binary phase diagrams. Springer-Verlag, 1982
- **ANDREAS ZÜTTEL.** Materials for Hydrogen Storage. *Materials Today,* 2003, vol. 6, 24-33
- **A.A. NAYEB-HASHEMI ; J.B. CLARK.** The Mg-Pd (Magnesium-Palladium) System. *Bull. Alloy Phase Diagrams,* 1985, vol. 6 (2), 164-167